# EUROPÄISCHE PATENTSCHRIFT

(11) **EP 2 962 320 B1**
(45) Veröffentlichungstag und Bekanntmachung des Hinweises auf die Patenterteilung: **05.04.2017**
(21) Anmeldenummer: 14707368.8
(22) Anmeldetag: 27.02.2014
(51) Int. Cl.: H01H 47/00, G05B 9/02, G05B 19/042

(54) **SICHERHEITSSCHALTVORRICHTUNG ZUM EIN- UND FEHLERSICHEREN AUSSCHALTEN EINER TECHNISCHEN ANLAGE**
SAFETY SWITCHING APPARATUS FOR THE CONNECTION AND FAILSAFE DISCONNECTION OF A TECHNICAL SYSTEM
DISPOSITIF DE COMMANDE DE SÉCURITÉ SERVANT À ENCLENCHER ET DÉCLENCHER DE MANIÈRE SÉCURISÉE UNE INSTALLATION TECHNIQUE

(30) Priorität: 27.02.2013 DE 102013101932
(43) Veröffentlichungstag der Anmeldung: 06.01.2016
(73) Patentinhaber: Pilz GmbH & Co. KG, 73760 Ostfildern (DE)
(72) Erfinder: VEIL, Richard, 73760 Ostfildern (DE); SCHWENKEL, Hans, 73760 Ostfildern (DE)
(74) Vertreter: Witte, Weller & Partner Patentanwälte mbB
(86) Internationale Anmeldenummer: PCT/EP2014/053803
(87) Internationale Veröffentlichungsnummer: WO 2014/131822

(56) Entgegenhaltungen:
- DE-A1- 10 011 211
- DE-A1-102004 020 995
- DE-C2- 19 702 009

## Beschreibung

Die vorliegende Erfindung betrifft eine Sicherheitsschaltvorrichtung zum Ein- und fehlersicheren Ausschalten einer technischen Anlage, mit einem ersten Eingang zum Aufnehmen eines über eine Zuleitung eingespeisten Taktsignals mit einer definierten Taktfrequenz f_{T}, mit einer fehlersicheren Steuer/Auswerteeinheit, die das Taktsignal verarbeitet, um in Abhängigkeit davon ein Ausgangssignal zum Ein- und Ausschalten der technischen Anlage zu erzeugen.

Eine solche Sicherheitsschaltvorrichtung ist aus einer Betriebsanleitung mit der Nummer 19 238-01 der hiesigen Anmelderin für das Sicherheitsschaltgerät PNOZ® X2 bekannt.

Sicherheitsschaltvorrichtungen im Sinne der vorliegenden Erfindung dienen dazu, eine gefahrbringende Maschine oder Anlage fehlersicher abzuschalten, wenn dies zum Schutz von Personen erforderlich ist. Die Sicherheitsschaltvorrichtungen überwachen typischerweise Meldesignale von Notaustastern, Schutztürschalter, Lichtschranken, Lichtgittern und anderen sicherheitsgerichteten Meldegeräten. Sie sind in der Lage, in Abhängigkeit von diesen Meldesignalen einen Stromversorgungspfad zu der überwachten Maschine oder Anlage zu unterbrechen. Wie leicht einzusehen ist, ist es von großer Bedeutung, dass die Sicherheitsfunktion stets gewährleistet ist und dass Fehler im Bereich der Sicherheitsschaltvorrichtung entweder beherrscht und/oder frühzeitig erkannt werden. Typischerweise sind Sicherheitsschaltvorrichtungen daher redundant und/oder mit Selbsttestfunktionen aufgebaut. Zumindest bei hohen Sicherheitsanforderungen werden auch die Meldesignale zu der Sicherheitsschaltvorrichtung redundant ausgeführt.

Die durch die Redundanz erreichbare Fehlersicherheit geht allerdings verloren, wenn ein Querschluss in den Verbindungsleitungen zwischen dem Meldegerät und der Sicherheitsschaltvorrichtung auftritt. Eine Möglichkeit einen Querschluss zu verhindern, ist das getrennte Verlegen der einzelnen Verbindungsleiter. Dies würde jedoch zu einer unübersichtlichen und komplexen Verkabelung der einzelnen Meldegeräte mit der Sicherheitsschaltvorrichtung führen und ist oft auch technisch nicht zu realisieren. Folglich werden die redundanten Verbindungsleitungen im Allgemeinen durch verschiedene Adern eines mehradrigen Kabels geführt. Dies erfordert jedoch, dass die Sicherheitsschaltvorrichtung über eine separate Maßnahme zur Querschlusserkennung verfügt.

Aus dem Stand der Technik sind im Wesentlichen zwei Verfahren zur Querschlusserkennung bekannt. Das erste Verfahren arbeitet mit statischen Potentialen auf den Verbindungsleitern, die bei einem Kurzschluss der beiden Leiter eine Sicherung auslösen. Derartige Verfahren sind beispielsweise aus DE 44 23 704 C1 oder aus DE 197 58 332 B4 bekannt. Nachteilig bei diesen Verfahren ist, dass sie im Wesentlichen von einer temperaturabhängigen Sicherung abhängen, deren Auslösepunkt aufgrund der Temperaturabhängigkeit nicht genau bestimmt werden kann. Dies war einer der Gründe, weshalb ein weiteres Verfahren mit dynamischen Signalen auf den Verbindungsleitungen entwickelt wurde.

Bei den dynamischen Verfahren werden unterschiedlich getaktete Signale auf den Verbindungsleitern zu dem Meldegerät verwendet. Dadurch lassen sich die Signale auf den getrennten Meldeleitungen voneinander unterscheiden und ein Querschluss kann erkannt werden. Beispielhaft sei hier auf DE 100 33 073 A1, DE 197 02 009 C2 und DE 198 05 722 A1 verwiesen. Nachteilig bei dynamischen Verfahren ist jedoch, dass die Meldesignale zunächst hinsichtlich des Auftretens eines Querschlusses überprüft werden müssen. Mit anderen Worten muss in einem ersten Schritt eine Signalauswertung stattfinden, wobei typischerweise das empfangene Eingangssignal mit einem Erwartungswert verglichen wird. Erst nach dieser Auswertung kann durch die Sicherheitsvorrichtung ein Signal für die Ausgänge erzeugt werden, das gegebenenfalls zum Abschalten der technischen Anlage führt.

Die beschriebe Signalauswertung wird zusätzlich durch die kontinuierliche Reduzierung der Eingangsströme erschwert, mittels derer die Verlustleistung an den Eingängen gesenkt werden soll. Durch die Verringerung der Eingangsströme wird zwar der Stromverbrauch der Steueranlagen vorteilhaft minimiert, jedoch haben die geringeren Eingangsströme zur Folge, dass ein Eingang anfälliger gegenüber Störungen wird, wodurch insbesondere Probleme beim Auswerten von oben beschriebenen dynamischen Signalen auftreten können. Dem kann durch zusätzliches Filter entgegengewirkt werden, jedoch auf Kosten der Reaktionszeit der Vorrichtung.

Störungen an den Eingängen treten besonders dann auf, wenn ein Meldegerät, bspw. ein Kontaktschalter, die meiste Zeit nicht benutzt wird und somit über eine "offene" Leitung mit dem Sicherheitsschaltvorrichtung verbunden ist. Offen heißt in diesem Zusammenhang, dass die Leitung nur einseitig mit einem definierten Potential verbunden ist. Offene Leitungen sind besonders gegen Störung anfällig, da, bspw. durch eine kapazitive Kopplung mit einer parallelen Leitung oder durch Induktion in einem elektromagnetischen Feld, ein Signal auf die offene Leitung übertragen werden kann. Diese Störsignale erhöhen die Fehlerrate beim Einlesen der Eingänge.

Vor diesem Hintergrund ist es eine Aufgabe der vorliegenden Erfindung, eine Sicherheitsschaltvorrichtung anzugeben, die mit geringen Eingangsströmen betrieben werden kann, dabei geringe Fehlerraten an den Eingängen aufweist und eine schnell Reaktionszeit ermöglicht.

Gemäß einem Aspekt der Erfindung wird diese Aufgabe durch eine Sicherheitsschaltvorrichtung eingangs genannter Art gelöst mit einer Stromerhöhungseinrichtung zum Erhöhen eines Eingangsstroms an dem ersten Eingang sowie einer Taktreferenz mit einer zweiten definierten Taktfrequenz (f_{R}), wobei die Stromerhöhungseinrichtung ein Schaltelement aufweist, über welches die Erhöhung des Eingangsstroms ein-und ausschaltbar ist, wobei das Schaltelement mit der Taktreferenz gekoppelt ist und dazu ausgebildet ist, die Stromerhöhungseinrichtung in Abhängigkeit der zweiten definierten Taktfrequenz (f_{R}) ein- und auszuschalten, um zyklische Störungen auf der Zuleitung an dem erste Eingang zu verringern.

Gemäß einem weiteren Aspekt der vorliegenden Erfindung wird diese Aufgabe durch ein Verfahren zum sicheren Detektieren eines Eingangssignal an einem ersten Eingang einer Sicherheitsschaltvorrichtung zum Ein- und fehlersicheren Ausschalten einer technischen Anlage gelöst, mit den Schritten: Bereitstellen eines ersten Eingangs; Aufnehmen eines über eine Zuleitung eingespeisten Taktsignals mit einer ersten definierten Taktfrequenz f_{T}; Bereitstellen einer fehlersicheren Steuer/Auswerteeinheit; Verarbeiten des Taktsignal durch die Steuer/Auswerteeinheit; und Erzeugen eines Ausgangssignal zum Ein- und Ausschalten der technischen Anlage; Bereitstellen einer Taktreferenz mit einer zweiten definierten Taktfrequenz f_{R}; Bereitstellen einer Stromerhöhungseinrichtung zum Erhöhen eines Eingangsstroms an dem ersten Eingang mit einem Schaltelement, über welches die Erhöhung des Eingangsstroms ein- und ausschaltbar ist; Koppeln des Schaltelement mit der Taktreferenz; und Ein- und Ausschalten der Stromerhöhungseinrichtung durch das Schaltelement in Abhängigkeit der zweiten definierten Taktfrequenz f_{R} der Taktreferenz, um zyklische Störungen auf der Zuleitung an dem ersten Eingang zu verringern.

Der neuen Erfindung liegt somit die Idee zugrunde, aktiv möglichen Störungen am Eingang entgegenzuwirken, indem der Eingangsstrom zyklisch erhöht wird. Die Stromerhöhung findet somit nicht kontinuierlich statt, sondern nur zu definierten Zeitpunkten. Die Stromerhöhung gewährleistet, wenn sie aktiv ist, ein sicheres und schnelles Auswerten der Eingänge. Sie wird vorzugweise aktiviert, wenn mit Fehlern beim Auswerten der Eingänge, beispielsweise hervorgerufen durch ein Übersprechen, zu rechnen ist. Durch den erhöhten Stromfluss am Eingang kann sich ein digitaler Zustand in Form eines definierten Spannungspegels am Eingang schneller einstellen. Insbesondere kann der digitale Auszustand, bei dem für gewöhnlich das Nullpotential am Eingang erwartet wird, schneller und sicherer erkannt werden.

Die Sicherheitsschaltvorrichtung weist hierzu eine Stromerhöhungseinrichtung mit einem Schaltelement und eine mit dem Schaltelement gekoppelte Taktreferenz auf. Über das Schaltelement wird die Stromerhöhungseinrichtung abhängig von der Taktreferenz zu definierten Zeitpunkten an- und ausgeschaltet. Die Stromerhöhung wird somit gezielt an den Eingängen hinzugeschaltet, wenn diese benötigt wird. Das Ein- und Ausschalten erfolgt im Takt der Taktreferenz, wobei die Taktreferenz vorteilhaft auf ein am Eingang anliegendes Störsignal synchronisiert ist. Zyklische Störungen auf der Zuleitung und daraus resultierende Einlesefehler können durch die gezielte Stromerhöhung am Eingang verringert werden. Vorteilhafterweise ist die Stromerhöhung dabei nur aktiv, wenn tatsächlich eine Störung vorliegt, so dass die Stromaufnahme und damit verbunden die Verlustleistung am Eingang nicht wesentlich erhöht wird.

Vorteilhaft bei der erfindungsgemäßen Vorrichtung ist insbesondere das aktive Entgegenwirken bei Störungen, das auch bei Eingängen zum Tragen kommt, an denen in den meisten Fällen kein Signal anliegt, aber dennoch eine kontinuierliche Auswertung stattfindet. Die Stromerhöhung wird somit vorzugsweise an allen Eingängen unabhängig vom Eingangssignal zyklisch aktiviert. Auf diese Weise wird auch Störungen entgegengewirkt, die nicht von den am Eingang anliegenden Signalen hervorgerufen werden. Dies ist beispielsweise der Fall, wenn auf eine am Eingang angeschlossene Leitung ein fremdes Signal kapazitiv eingekoppelt ist und es so zu Abweichungen von einem erwarteten definierten Spannungspegel kommt.

Darüber hinaus wird die Verlustleistung an den Eingängen nur unwesentlich durch die neue Stromerhöhungseinrichtung erhöht. Durch die Taktung der Stromerhöhung mittels der Taktreferenz und dem Schaltelement wird die Stromerhöhung nur aktiviert, wenn sie benötigt wird. Mit anderen Worten findet eine zyklische Erhöhung des Eingangsstrom nur statt, wenn erwarteten Störungen entgegengewirkt werde kann. Die Frequenz f_{R} der Taktreferenz wird hierzu an die Frequenz des zu erwartenden Störsignals angepasst. Ferner ist das Schaltelement mit der Taktreferenz gekoppelt, so dass auch die Betätigung der Stromerhöhungseinrichtung auf das Auftreten von Störungen synchronisiert ist. Die Stromerhöhungseinrichtung, die, wenn kontinuierlich eingeschaltet, zu einer erhöhten Verlustleistung führen würde, ist somit nur für den konkreten Bedarfsfall aktiviert, so dass die Verlustleistung begrenzt wird.

Schließlich besitzt die neue Sicherheitsschaltvorrichtung den Vorteil, dass die Reaktionszeit der Vorrichtung gegenüber anderen Sicherheitsschaltvorrichtungen mit dynamischer Querschlusserkennung gesenkt werden kann. Durch die verminderte Fehlerrate am Eingang wir die Signalverarbeitung und -auswertung beschleunigt, wodurch die Reaktionszeit der gesamten Vorrichtung reduziert wird.

Insgesamt ermöglicht die neue Sicherheitsschaltvorrichtung somit eine geringere Fehleranfälligkeit beim Einlesen der Eingänge und eine daraus resultierende verkürzte Reaktionszeit. Die oben genannte Aufgabe ist damit vollständig gelöst.

In einer bevorzugten Ausgestaltung weist die Stromerhöhungseinrichtung einen Masseanschluss und einen ersten Widerstand, der zum Schaltelement in Serie geschaltet ist, auf, wobei der erste Widerstand und das Schaltelement parallel zum ersten Eingang angeordnet sind und der erste Eingang über den Widerstand und das Schaltelement mit dem Masseanschluss leitend verbunden ist, wenn die Stromerhöhungseinrichtung eingeschaltet ist.

Diese Ausgestaltung ermöglicht eine sehr kostengünstige Realisierung der Stromerhöhungseinrichtung. Die Stromerhöhungseinrichtung wird durch einen zusätzlichen Widerstand am bestehenden Eingang gebildet. Die Stromerhöhung am Eingang wird durch Absenken des Eingangswiderstandes des Eingangs erreicht. Zum Einschalten der Stromerhöhungseinrichtung wird der Widerstand durch das Schaltelement parallel zum Eingang geschaltet. Durch den zusätzlichen Strompfad kann ein größerer Strom in die Eingänge fließen.

In einer weiteren Ausgestaltung weist das Schaltelement eine definierte Schaltdauer auf, wobei die Schaltdauer kleiner ist als eine von der Taktreferenz definierte Periodendauer 1/f_{R} der Taktreferenz, insbesondere kleiner als 1/5 der Periodendauer.

Die Schaltdauer und damit verbunden die Wirkdauer der Stromerhöhungseinrichtung ist hiernach kleiner als die Periodendauer der Taktreferenzfrequenz f_{R}. Das Schaltelement wird mit der steigenden Flanke der Taktreferenz eingeschaltet, jedoch bereits vor Ablauf der Periodendauer der Taktreferenzfrequenz, vorzugsweise vor Ablauf eines Fünftels der Periodendauer, wieder ausgeschaltet. Diese Ausgestaltung ist von Vorteil, da eine Störung am Eingang durch ein eingekoppeltes getaktetes Signal in der Regel nur beim Ein- bzw. Ausschalten auftritt. Mit anderen Worten ist in dieser Ausgestaltung die Stromerhöhungseinrichtung nur eingeschaltet, wenn eine Störung am Eingang zu erwarten ist und der Störung mittels der Stromerhöhung entgegengewirkt werden kann. In einer besonders bevorzugten Ausgestaltung kann die Schaltdauer variabel eingestellt werden, beispielsweise über den Mikrokontroller der Steuer/Auswerteeinheit oder über ein zusätzliches variables Regelelement.

In einer weiteren Ausgestaltung ist das Schaltelement mit einem Detektorelement gekoppelt, wobei das Detektorelement die Auswertung der Eingänge durch die Steuer/Auswerteeinheit überwacht und das Schaltelement die Stromerhöhung ausschaltet, wenn ein definierter Zustand erreicht ist.

In dieser Ausgestaltung wird die Stromerhöhungseinrichtung abgeschaltet, wenn durch die Steuer/Auswerteeinheit ein definierter Zustand an den Eingängen erkannt worden ist. Dies ist besonders vorteilhaft, wenn das zu empfangene Signal ein digitales Signal ist und ein definierter Zustand am Eingang erwartet wird. Bspw. kann an einem Eingang mit einer offenen Zuleitung die Stromerhöhung vorzeitigt beendet werden, wenn der zu erwartende Wert bereits richtig erkannt worden ist, eine Störung also entweder bereits abgeklungen ist oder das Detektieren des digitalen Signal nicht beeinflusst hat. Dies trägt ebenfalls dazu bei, dass die Stromerhöhungsschaltung nur aktiviert ist, wenn sie benötigt wird, und somit zu einer stromsparenden Realisierung.

In einer weiteren Ausgestaltung weist die Stromerhöhungseinrichtung einen zum Eingang in Serie geschalteten variablen Widerstand auf, wobei der Widerstand einen maximalen und einen minimalen Widerstandswert aufweist, wobei der variable Widerstand den minimalen Widerstandswert aufweist, wenn die Stromerhöhungseinrichtung eingeschaltet ist.

Der in Serie geschaltete variable Widerstand am Eingang dient in erster Linie einer Strombegrenzung für den Eingang, um die Verlustleistung am Eingang zu reduzieren. Vorzugsweise handelt es sich bei dem variablen Widerstand um einen Längsregler. Eine Stromerhöhung am Eingang wird in dieser Ausgestaltung durch deaktivieren der Strombegrenzung hervorgerufen. Die Aktivierung und Deaktivierung erfolgt durch das Schaltelement, bspw. indem die Spannungsreferenz des Längsreglers deaktiviert wird. Vorteilhaft bei dieser Ausgestaltung ist, dass keine zusätzliche Stromerhöhungseinrichtung für den Fall, dass der Eingang über einen Strombegrenzer verfügt, hinzugefügt werden muss, sondern lediglich eine schaltbare Aktivierung bzw. Deaktivierung des Strombegrenzers zur Verfügung gestellt werden muss. Alternativ kann eine Stromerhöhung am Eingang und ein paralleles Deaktivieren der Strombegrenzung miteinander kombiniert werden.

In einer weiteren Ausgestaltung weist die Sicherheitsschaltvorrichtung mindestens einen zweiten Eingang auf mit einer zweiten Stromerhöhungseinheit, wobei das Schaltelement die erste und die zweite Stromerhöhungseinrichtung ein- und ausschaltet.

Zusätzlich zum ersten Eingang weist die Sicherheitsschaltvorrichtung mindestens einen zweiten Eingang auf mit einer weiteren Stromerhöhungseinrichtung. Die weitere Stromerhöhungseinrichtung wird vorteilhaft über dasselbe Schaltelement an- und ausgeschaltet wie die erste Stromerhöhungseinrichtung. Durch die Einsparung eines separaten Schaltelements kann auf diese Weise kostengünstig eine Stromerhöhung an einer Vielzahl von Eingängen realisiert werden.

In einer weiteren Ausgestaltung weist die Taktreferenz mindestens einen externen Anschluss zur Aufnahme eines Fremdsignals auf und die Taktreferenz wird auf das Fremdsignal synchronisiert.

Diese Ausgestaltung ist besonders vorteilhaft, da die Entstörung auf beliebige Störsignale angepasst werden kann. Beispielsweise kann mit einem Flanken-Detektor ein zyklisches Störsignal am Eingang erfasst werden und die Taktreferenz auf dieses eingestellt werden. Die Frequenz f_{R} der Taktreferenz kann alternativ auch auf ein von der Sicherheitsschaltvorrichtung ausgesandtes Signal synchronisiert werden, von dem bekannt ist, dass es auf parallele Leitung durch kapazitive Kopplung überspricht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer automatisiert arbeitenden Anlage mit einem vereinfachten Ausführungsbeispiel der neuen Sicherheitsschaltvorrichtung,
- Fig. 2: ein schematisches Ausführungsbeispiel der neuen Sicherheitsschaltvorrichtung,
- Fig. 3: ein weiteres schematisches Ausführungsbeispiel der neuen Sicherheitsschaltvorrichtung,
- Fig. 4: eine Diagrammdarstellung einer möglichen Störgröße am Eingang der neuen Sicherheitsschaltvorrichtung,
- Fig. 5: eine schaltungstechnische Implementierung eines Ausführungsbeispiels eines Eingangs der neuen Sicherheitsschaltvorrichtung,
- Fig. 6: eine schaltungstechnische Implementierung eines weiteren Ausführungsbeispiels eines Eingangs der neuen Sicherheitsschaltvorrichtung, und
- Fig. 7: eine schaltungstechnische Implementierung eines weiteren Ausführungsbeispiels mit einer Vielzahl von Eingängen.

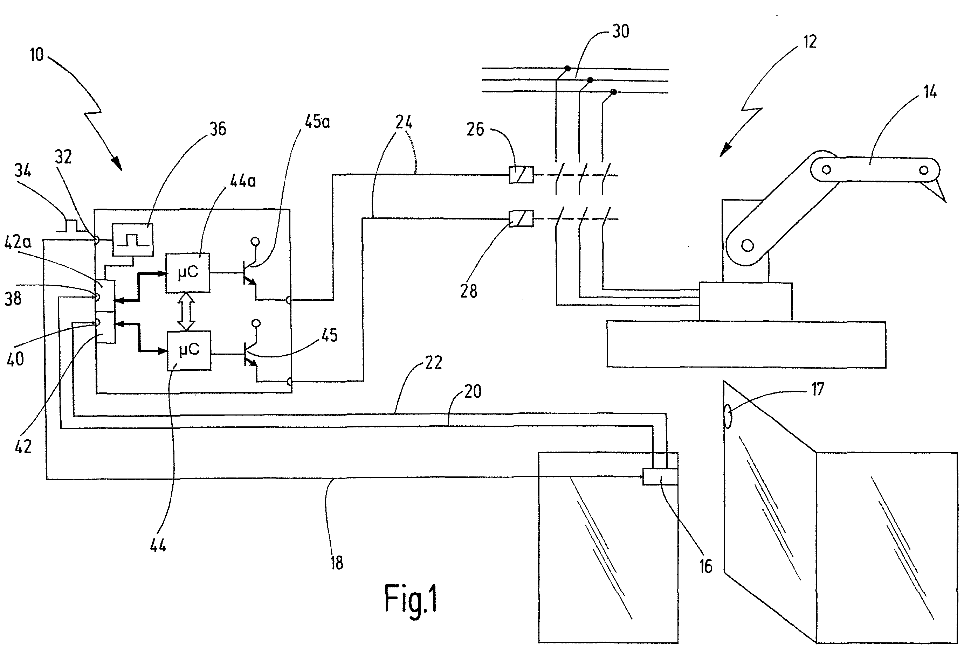

In Fig. 1 ist die neue Sicherheitsschaltvorrichtung in ihrer Gesamtheit mit der Bezugsziffer 10 bezeichnet.

Die neue Sicherheitsschaltvorrichtung 10 dient zur Überwachung und Absicherung einer automatisiert arbeitenden Anlage 12. Beispielhaft für diese automatisiert arbeitende Anlage 12 ist hier ein sich bewegender Roboter 14 dargestellt. Zur Absicherung befindet sich der Roboters in einem umzäunten Bereich, der durch eine Schutztür mit einem Schutztürschalter 16 und den zugehörigen Betätiger 17 gesichert ist. Bei unberechtigten Zugang wird über den Schutztürschalter in Verbindung mit der Sicherheitsschaltvorrichtung 10 der Roboter 14 in eine gefahrlose Stellung überführt oder gegebenenfalls abgeschaltete. Die neue Sicherheitsschaltvorrichtung 10 ist jedoch nicht auf diesen konkreten Einsatzbereich beschränkt. Eine Absicherung des Roboters 14 könnte auch durch andere Meldegeräte, beispielsweise einen Not-Aus-Schalter oder über eine Lichtschranke, realisiert werden.

Der Schutztürschalter 16 ist in diesem Ausführungsbeispiel über drei Leitungen 18, 20, 22 mit der Sicherheitsschaltvorrichtung 10 verbunden. Über die Leitung 18 wird ein Signal von der Sicherheitsschaltvorrichtung 10 zum Schutztürschalter 16 übertragen, während die Leitung 20 und 22 ein Signal vom Schutztürschalter 16 zur Sicherheitsschaltvorrichtung 10 zurückführen. Typischerweise, um den Verkabelungsaufwand zu begrenzen, sind die drei Leiter 18, 20, 22 die Adern einer einzelnen Mantelleitung, die vom Schutztürschalter 16 zur Sicherheitsschaltvorrichtung 10 verlegt ist.

Ausgangsseitig ist die Sicherheitsschaltvorrichtung 10 über eine Leitung 24 redundant mit zwei Schützen 26, 28 verbunden, deren Arbeitskontakte in an sich bekannter Weise in einer Stromzuführung 30 des Roboters 14 angeordnet sind. Über die Schütze 26, 28 unterbricht die Sicherheitsschaltvorrichtung 10 die Stromzufuhr für den Roboter 14, wenn der Schutztürschalter 16 betätigt wird, oder wenn im Rahmen der allgemeinen Fehlerüberwachung der Sicherheitsschaltvorrichtung 10 ein undefinierter und damit sicherheitskritischer Zustand erkannt wird. Ein solcher sicherheitskritischer Zustand könnte beispielsweise durch einen Querschluss zwischen den Adern der Mantelleitung, über die die Leitungen 18, 20, 22 geführt sind, auftreten, wobei die Sicherheitsschaltvorrichtung 10 grundsätzlich dazu ausgebildet ist, in einem undefinierten Zustand die zu überwachende technische Anlage 12 in einen sicheren Zustand zu überführen.

Bei der Sicherheitsschaltvorrichtung 10 handelt es sich hier gemäß einem bevorzugten Ausführungsbeispiel um ein Gerät, welches den sogenannten Performance Level (PL) e der europäischen Norm EN ISO 13849-1 oder einer vergleichbaren Sicherheitsnorm erfüllt und dementsprechend zur Absicherung von technischen Anlagen zugelassen ist. Beispielsweise könnte es sich um eine programmierbare Sicherheitsschaltvorrichtung handeln, wie diese unter der Bezeichnung PSS® von der Anmelderin der vorliegenden Erfindung vertrieben wird.

In dem Ausführungsbeispiel gemäß Fig. 1 ist nur ein Meldegerät in Form des Schutztürschalters 16 dargestellt. Es versteht sich jedoch, dass in anderen Ausführungsbeispielen auch eine Vielzahl von verschiedenartigen Meldegeräten eingesetzt werden kann, die jeweils mit der Sicherheitsschaltvorrichtung 10 verbunden sind. Auf diese Weise lässt sich besonders effizient und kostengünstig eine Absicherung einer Gesamtanlage erreichen.

Die Sicherheitsschaltvorrichtung 10 verfügt in diesem Ausführungsbeispiel über einen Taktausgang 32. Der Taktausgang 32 ist mit einem Taktsignal 34 belegt, welches gemäß diesem Ausführungsbeispiel von einer in der Sicherheitsschaltvorrichtung integrierten Taktreferenz 36 bereitgestellt wird. In anderen Ausführungsbeispielen kann das Taktsignal 34 auch von einer anderen von der Sicherheitsschaltvorrichtung 10 unabhängigen Einrichtung bereitgestellt werden. Vorzugsweise "kennt" bzw. erhält die Steuer/Auswerteeinheit 44 das Taktsignal 34 zur Auswertung von einer externen Referenz.

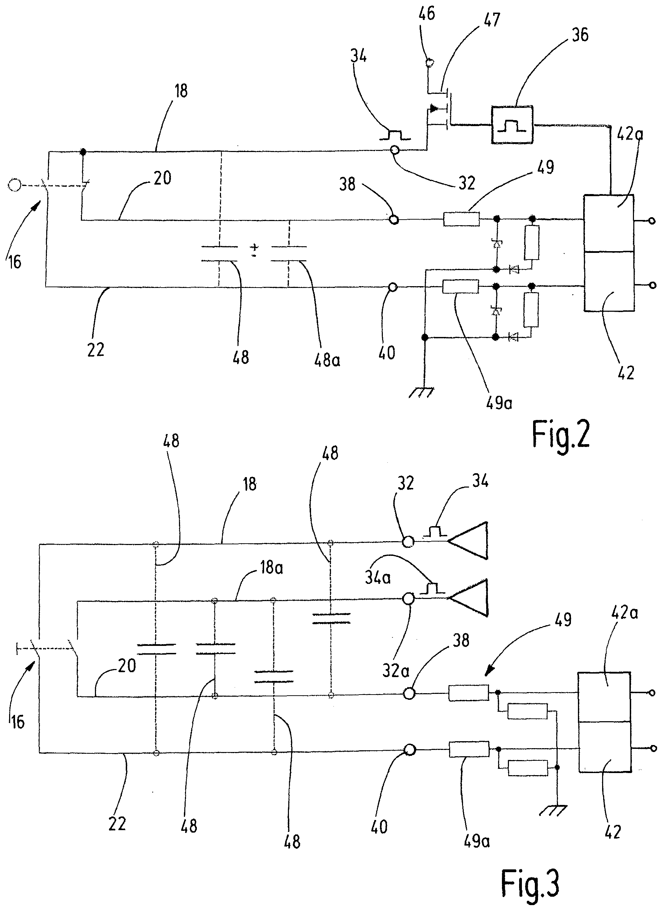

Über die Leitung 18 wird das Taktsignal 34 zum Schutztürschalter 16 übertragen. Der Schutztürschalter 16 ist wiederum über die Leitung 20, 22 mit einem ersten Eingang 38 und einem zweiten Eingang 40 der Sicherheitsschaltvorrichtung 10 verbunden. In diesem bevorzugten Ausführungsbeispiel handelt es sich bei dem Schutztürschalter 16 um einen zweikanaligen Schutztürschalter 16 mit einem Öffner- und einem Schließerkontakt, der zwei Zustände annehmen kann. Im ersten Zustand ist die Leitung 18 mit der Leitung 20 leitend verbunden und im zweiten Zustand ist die Leitung 18 mit der Leitung 22 leitend verbunden. Alternativ kann der Schutztürschalter 16 redundant über zwei hinführende und zwei wegführende Leitungen verbunden sein, wie schematisch in der Figur 3 angedeutet ist.

Ein Steuer/Auswerteeinheit 44 ist in diesem Ausführungsbeispiel redundant durch zwei Mikroprozessor 44, 44a angedeutet, die miteinander gekoppelt sind. Sie ist dazu ausgebildet, die Eingänge 38 und 40 auszuwerten, indem sie das empfangene Taktsignal mit einem erwarteten Taktsignal vergleicht. Durch den Vergleich erkennt die Steuer/Auswerteeinheit 44, in welchem Zustand der Schutztürschalter 16 ist, da im ersten Zustand das Taktsignal 34 am ersten Eingang 38 und im zweiten Zustand am zweiten Eingang 40 zu erwarten ist. Der in einem Zustand nicht belegte Eingang sollte dabei kein Signal aufweisen. Erkennt die Steuer/Auswerteeinheit 44, dass der Schutztürschalter 16 betätigt worden ist, d.h. in diesem Fall, dass das Signal nicht mehr an der Leitung 20, sondern an der Leitung 22 anliegt, werden über die Schaltelemente 45, 45a die Schütze 26, 28 aktiviert und die Stromzufuhr 30 zum Roboter 14 unterbrochen.

Tritt ein Signal oder ein nicht vorgesehenes Potential am nicht belegten Eingang auf, muss die Sicherheitsschaltvorrichtung 10 davon ausgehen, dass es zu einem Fehler auf den Zuleitung 18, 20, 22, den Eingängen 38, 40 oder dem Schutztürschalter 16 gekommen ist. In diesem Fall soll die technische Anlage 12 ebenfalls durch die Sicherheitsschaltvorrichtung 10 in einen ungefährlichen Zustand überführt werden. Auf diese Weise können insbesondere Querschlüsse zwischen den Leitern 18, 20, 22 detektiert werden, die auftreten können, wenn die Leiter 18, 20, 22 in einer einzelnen Mantelleitung geführt werden und diese durch Einklemmen oder Verknicken beschädigt wird.

Die Sicherheitsschaltvorrichtung 10 weist hier eine Eingangsschaltung 42 auf, über die die Eingänge 38, 40 mit der Steuer/Auswerteeinheit 44 verbunden sind. Vorzugsweise verfügt jeder Eingang über eine eigene zugehörige Eingangsschaltung 42, 42a. Die Eingangsschaltungen 42, 42a sind hier mit der Taktreferenz 36 verbunden und dazu ausgebildet, im Zusammenspiel mit der Taktreferenz 36 den Eingangsstrom auf noch näher zu beschreibende Weise zu erhöhen. Die Eingangsschaltungen 42, 42a tragen damit dazu bei, die Eingänge 38, 40 fehlerfrei und schnell auszuwerten. Durch die Eingangsschaltungen 42, 42a soll somit eine durch die Querschlusserkennung hervorgerufene Verzögerung ausgeglichen werden.

Die Eingangsschaltungen 42, 42a sind hier mit der Taktreferenz 36 verbunden, so dass die Stromerhöhung hier im Takt der Taktreferenz 36 ein- und ausgeschaltet wird. Über die Eingangsschaltungen 42, 42a werden somit an den Eingängen 38, 40 eine zeitlich begrenzte Stromerhöhung eingestellt. Die Taktreferenz 36 ist hierbei vorzugsweise auf eine zyklisch auftretende Störung, die das Auswerten der Signalzustände an den Eingängen erschwert, synchronisiert. Eine Störung kann hier beispielsweise durch eine kapazitive Einkopplung der taktführenden Leitung 18 auf eine nicht taktführende Leitung 20, 22 hervorgerufen werden. Der erhöhte Eingangsstrom wirkt dem entgegen, da das Laden der für die Einkopplung relevanten Leitungskapazitäten beschleunigt wird und so die Störung schneller abklingt. Da die Stromerhöhung nur temporär eingestellt ist, wird eine geringere Verlustleistung erreicht als mit dauerhafter Stromerhöhung. Die Dauer der Stromerhöhung ist vorzugsweise kleiner als die Periodendauer (1/f_{R}) der Taktreferenz, da eine Störung regelmäßig nur an den Flanken eines Störsignals auftritt und die Stromerhöhung vorteilhaft nur dann kurzzeitig eingeschaltet ist.

Fig. 2 und Fig. 3 zeigen in einer vereinfachten schematischen Darstellung wie Meldegeräte 16 an die Sicherheitsschaltvorrichtung 10 angeschlossen werden können. Fig. 2 zeigt dabei vereinfacht das Ausführungsbeispiels aus Fig. 1. Fig. 3 zeigt eine alternative Anbindung eines Meldegeräts 16 über redundante Zuleitungen. Gleiche Bezugsziffern bezeichnen gleiche Teile wie in Fig. 1.

In der Fig. 2 ist die Leitung 18 über einen Transistor 47 mit einer Versorgungsspannung 46 verbunden. Durch zyklisches Betätigen des Transistors 47 wird das Taktsignal 34 auf der Leitung 18 erzeugt. Die zyklische Betätigung erfolgt hier über die Taktreferenz 36, die, wie in dem Ausführungsbeispiel nach Fig. 1, ebenfalls mit den Eingangsschaltungen 42, 42a verbunden ist. Die Leitung 18 ist mit dem Schutztürschalter 16 verbunden, der hier durch eine Öffner-Schließer-Kombination dargestellt ist. Die Leitungen 20, 22 verbinden die Öffner-Schließer-Kombination über die Eingängen 38, 40 mit den Eingangsschaltungen 42, 42a. Die Eingangsschaltungen 42, 42a sind ausgangsseitig mit der hier nicht dargestellten Steuer/Auswerteeinheit verbunden.

Der Darstellung ist zu entnehmen, dass je nach Zustand des Schutztürschalter 16 eine der Leitungen 20, 22 "offen" ist, d.h. in diesem Zustand nicht mit einem Signal belegt ist. Offene Leitungen sind anfällig gegenüber Übersprechen oder Einstrahlung von anderen Signalen, insbesondere wenn sie, wie in diesem Ausführungsbeispiel, parallel zu taktführenden Leitungen verlegt sind oder sich anderweitig innerhalb des Einflussbereichs einen elektrischen Felds befinden.

Mit der Bezugsziffer 48 sind Leitungskapazitäten angedeutet, die zwischen den Leitungen 18, 20 und 22 auftreten. Bei einer üblichen Mantelleitung mit Querschnitten von 1,5 mm² kann eine Leitungskapazität 48 zwischen zwei Adern in Größenordnungen von 250 nF/km Mantelleitung auftreten. Diese unvermeidbare kapazitive Kopplung zwischen den einzelnen Adern einer Mantelleitung hat zur Folge, dass ein Signal von der Leitung 18 auf eine offene Leitung 20 oder 22 überspricht. Ein Übersprechen tritt besonders dann auf, wenn auf einer der Leitungen 18, 20 oder 22 ein getaktetes Signal geführt wird und die Leitungskapazitäten 48, 48a mit jedem Taktwechsel umgeladen werden.

Die Fig. 3 zeigt eine Abwandlung zu den Ausführungsbeispielen aus Fig. 1 und Fig. 2. Der Schalter 16 ist hier ein redundanter Sicherheitsschalter, beispielsweise ein Not-Aus-Schalter, mit zwei Eingängen und zwei Ausgängen und zwei Schließerkontakten. Die Leitungen 18, 18a führen je ein Taktsignal 34, 34a zum Schalter 16 und sind in einem ersten Zustand des Schalters 16 von den rückführenden Leitungen 20, 22 getrennt. In einem zweiten Zustand sind die Leitungen 18 und 20 sowie 18a und 22 leitenden miteinander verbunden. Die Taktsignale 34 und 34a sind vorzugsweise nicht synchron.

Im ersten Zustand sind die Leitungen 20, 22 "offen". Zwischen den Leitern 18, 18a, 20 und 22 treten, wie bereits im Ausführungsbespiel nach Fig. 2 beschrieben, Leitungskapazitäten 48 auf, so dass auch hier Störeffekte an den Eingängen 38, 40 durch Übersprechen zu erwarten sind. Zusätzlich sind in diesem Ausführungsbeispiel die Taktsignale 34, 34a nicht synchron. Ein Störsignal, welches auf die offenen Leitungen überspricht, könnte folglich eine Kombination aus beiden Taktsignalen sein. Die Taktreferenz wird daher in einem bevorzugten Ausführungsbeispiel auf mehrere Störsignale synchronisiert, um in zuvor beschriebener Weise Einlesefehler an den Eingängen zu minimieren.

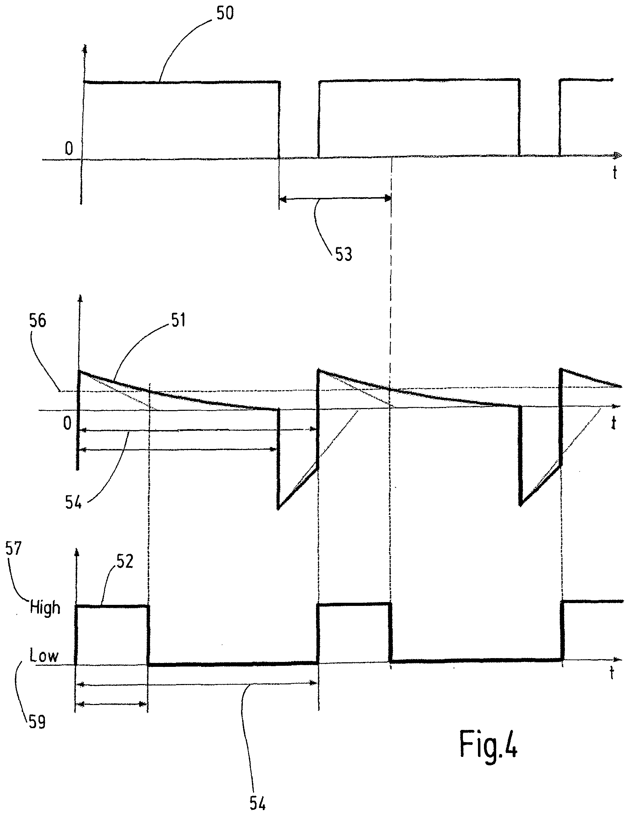

Die Fig. 4 zeigt eine graphische Darstellung eines möglichen Störeffekts auf einer offenen Leitung 20, 22, wie sie in einem der Ausführungsbeispiele nach Fig. 1, 2 oder 3 durch Übersprechen auftreten können. Das übersprechende Taktsignal ist in der oberen Graphik mit der Bezugsziffer 50 dargestellt. Es handelt sich hier um ein Rechtecksignal, wie es zur dynamischen Querschlusserkennung eingesetzt wird, welches in einer zu der offenen Leitung parallel verlaufenden Leitung übertragen wird. Der Graph der mittleren Graphik zeigt beispielhaft den analogen Spannungsverlauf 51 eines Störsignals auf dem offenen Leiter, auf den das Taktsignal 50 kapazitiv eingekoppelt wird.

Der Spannungsverlauf 51 an den Eingängen 38 oder 40 wird maßgeblich durch die Leitungskapazitäten 48 und die Eingangswiederständen 49 der Eingänge 38,40 bestimmt. Jeder Taktwechsel des Taktsignals 50 führt zu einem Umladen der Kapazitäten 48 und einem Lade- bzw. Entladestrom. Mit der Taktflanke des Taktsignals nimmt die Spannung einen maximalen Wert an und klingt anschließend mit dem Aufladen der Leitungskapazität 48 exponentiell ab.

Die gestrichelte Linie 56 deutet hier einen Schwellwert, bspw. 5V, an, bei dessen Überschreiten am Eingang ein Wechsel des digitalen Zustands angenommen wird. Dem Diagramm ist zu entnehmen, dass die Lade- und. Entladeströme zu einem Überschreiten des Schwellwerts 56 auf der offenen Leitung führen können.

Der Graph 52 der unteren Graphik zeigt zeitsynchron zu dem Spannungsverlauf 51 das resultierende digitale Signal, wie es an der Steuer/Auswerteeinheit anliegt, wenn die erfindungsgemäße Stromerhöhung nicht aktiviert ist. So lange der Schwellwert 56 überschritten ist, ist der Eingang im HIGH Zustand 57. Erst wenn das Übersprech-Signal den Schwellwert 56 unterschritten hat, geht der Eingang in den LOW Zustand 59 über. In dem hier gezeigten Beispiel tritt der Wechsel nach ca. 1/3 der Periodendauer 54 des einkoppelnden Taktsignals 50 ein.

Ohne eine im Folgenden beschriebene Eingangsschaltung 42 verzögert sich die Auswertung der Steuer/Auswerteeinheit 44 mindestens um die Zeitdauer 53. Ein fehlersicheres Auslesen kann erst erfolgen, wenn das eingekoppelte Signal abgeklungen ist. Dies führt zu einer erhöhten Reaktionszeit der gesamten Sicherheitsschaltvorrichtung 10, die insbesondere bei schnellen Steuerungen mit Verarbeitungszyklen unter einer Millisekunde nicht unerheblich ist.

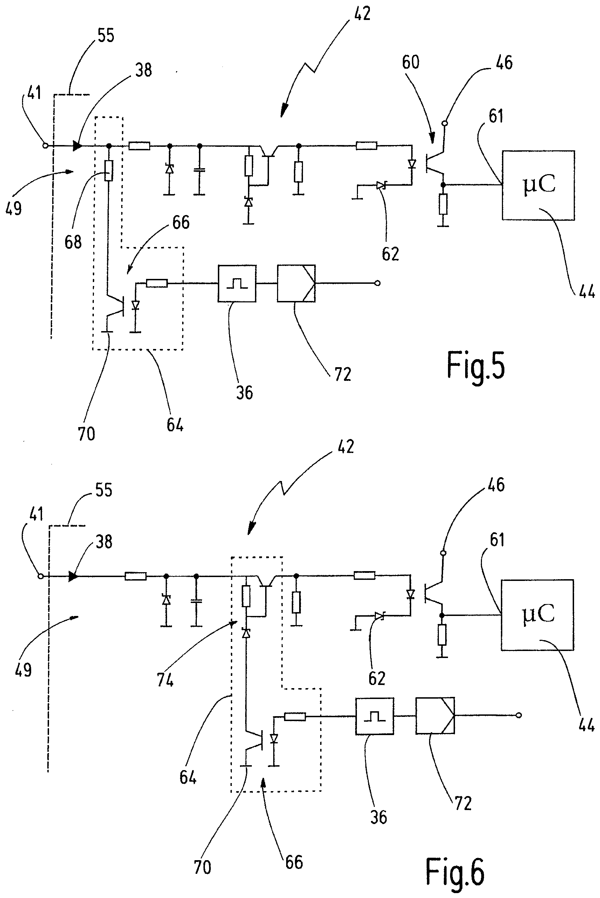

Die Fig. 5 zeigt eine schaltungstechnische Implementierung eines Ausführungsbeispiels einer Eingangsschaltung 42 der neuen Sicherheitsschaltvorrichtung 10. Über eine Anschlussklemme 41 am Gehäuse 55 der Sicherheitsschaltvorrichtung 10 ist ein Meldegerät (hier nicht dargestellt) an die Eingangsschaltung 42 angeschlossen. Das vom Meldegerät eingehende analoge Signal wird geglättet, begrenzt und in ein digitales Signal umgewandelt. Die Umwandlung des analogen Signals erfolgt hier durch einen Optokoppler 60, der ausgangsseitig bei Überschreiten eines Schwellwerts 56 die Versorgungsspannung 46 als HIGH Zustand 57 an den Eingang 61 der Steuer/Auswerteeinheit 44 schaltet. Der Schwellwert 56 wird dabei beispielsweise durch eine Zener-Diode 62 festgelegt.

Mit der Bezugsziffer 64 sind ferner die Bauelemente eines ersten Ausführungsbeispiels einer Stromerhöhungseinrichtung zusammengefasst. Zusätzlich zum Schaltelement 66 weist die Stromerhöhungseinrichtung 64 hier einen Widerstand 68 auf. Das Schaltelement 66 ist hier ein Optokoppler, um den Eingang galvanisch von einer dahinterliegenden Logik zu trennen. Alternative kann jedoch auch ein anderes Schaltelement zum Aktivieren der Stromerhöhungseinrichtung verwendet werden. Der Widerstand 68 und das Schaltelement 66 verbinden den Eingang 38 mit einem Masseanschluss 70. Das Schaltelement 66 ist an die Taktreferenz 36 gekoppelt und wird mit der Frequenz der Taktreferenz f_{R} ein- und ausgeschaltet.

Ist das Schaltelement 66 eingeschaltet (im leitenden Zustand), ist der Eingang 38 über den Widerstand 68 parallel mit der Masse 70 verbunden. Durch diesen zusätzlichen Strompfad am Eingang verringert sich der Eingangswiderstand 49 des Eingangs 38. Aufgrund des ohmschen Gesetzes resultiert daraus ein höherer Stromfluss in den Eingang hinein.

Die Taktreferenz 36 ist mit dem Schaltelement 66 gekoppelt, welches im Takt der Taktreferenz 36 betätigt wird. Die Taktreferenz 36 ist vorzugsweise auf den Takt eines am Eingang zyklisch auftretenden Störsignals synchronisiert, beispielsweise eines durch Übersprechen eingekoppelten Signals, wie es in der mittleren Graphik der Fig. 4 dargestellt ist. Die Stromerhöhung wird in diesem Fall immer mit der steigenden Flanke des Störsignals aktiviert, um ein Laden der für die Einkopplung relevanten Leitungskapazitäten zu beschleunigen, so dass sich ein definierter Zustanden schneller an den Eingängen einstellen kann. Die Stromerhöhung wird deaktiviert, wenn der Störeffekt abgeklungen ist. Das Ausschalten erfolgt dabei nach einer definierten Schaltdauer des Schaltelements 66, die hier über das Regelelement 72 eingestellt wird, oder aktiv, wenn die Steuer/Auswerteeinheit einen definierten Zustand erkannt hat. Das Regelelement 72 zum Einstellen der Schaltdauer kann in einem anderen Ausführungsbeispiel auch in der Steuer/Auswerteeinheit 44 integriert sein.

Die Fig. 6 zeigt ein alternatives Ausführungsbeispiel einer Eingangsschaltung 42 der neuen Sicherheitsschaltvorrichtung 10. In diesem Ausführungsbeispiel wird ein Begrenzungselement 74, welches den Stromfluss am Eingang reguliert, deaktiviert. Das Begrenzungselement 74 ist vorzugsweise in Form eines Längsreglers in die Eingangsschaltung 42 integriert und hält ab einem definierten Spannungswert den Strom am Eingang konstant.

Das Begrenzungselement 74 ist mit dem Schaltelement 66 gekoppelt, welches im Takt der Taktreferenz 36 das Begrenzungselement 74 deaktiviert und aktiviert, um so einen höheren Eingangsstrom in Abhängigkeit der Taktreferenz zu ermöglichen. Dieses Ausführungsbeispiel ist besonders effizient, da außer dem Schaltelement 66 keine zusätzlichen Bauteile der Eingangsschaltung hinzugefügt werden.

In einem weiteren Ausführungsbeispiel können die Ausführungsbeispiel nach Fig. 5 und Fig. 6 auch kombiniert werden. Dabei wird der Stromfluss am Eingang zum einen durch Hinzuschalten eines zusätzlichen Strompfads und zum anderen durch gleichzeitiges Abschalten des Begrenzungselements 74 realisiert. Beide Stromerhöhungseinrichtungen werden in Anhängigkeit der Taktreferenz 36 geschaltet. Das Schalten erfolgt jedoch gegenläufig, d.h. während die Stromerhöhung am Eingang durch einen zusätzlichen Strompfad aktiviert ist, ist das Begrenzungselement deaktiviert und umgekehrt.

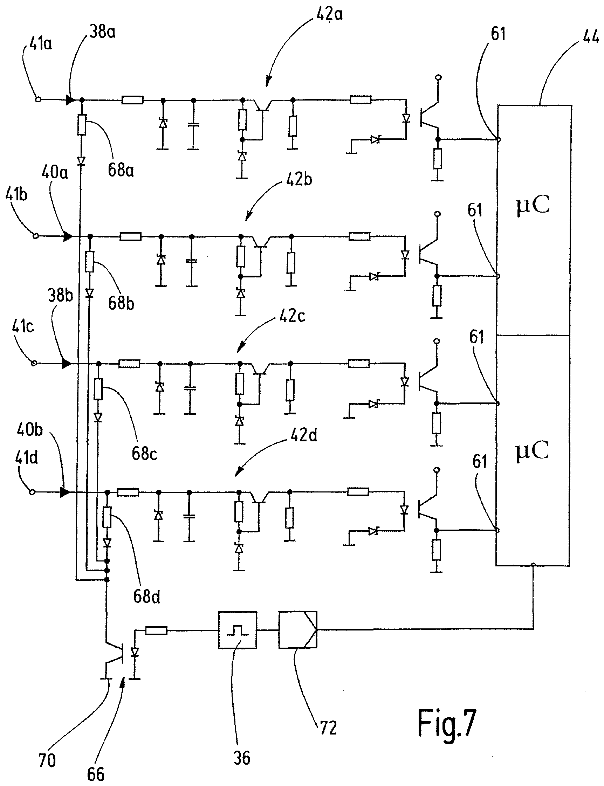

Die Fig. 7 zeigt ein weiteres Ausführungsbeispiel, bei dem die Sicherheitsschaltvorrichtungen vier Eingängen 38a, 38b, 40a, 40b aufweist. Jeder dieser Eingänge 38a, 38b, 40a, 40b weist dabei eine eigene Eingangsschaltung 42a, 42b, 42c, 42d auf. Gemäß einem bevorzugten Ausführungsbeispiel sind die Stromerhöhungseinrichtungen, hier in Form der Widerständen 68a, 68b, 68c, 68d, der Eingangsschaltungen über ein gemeinsames Schaltelement 66 mit der Taktreferenz 36 gekoppelt. Wird das Schaltelement betätigt ist wird die Stromerhöhung an allen Eingängen aktiviert. Auf diese Weise lassen sich kostengünstig und effizient Störeffekte an mehreren Eingängen über ein einzelnes Schaltelemente beseitigen.

Die zuvor beschriebenen Einrichtungen zur Stromerhöhung können alternativ in allen Ausführungsbeispielen auch durch eine Stromquelle realisiert werden. Eine Stromquelle hätte gegenüber den vorstehenden Realisierungen den Vorteil, dass die aktivierte Stromerhöhungseinrichtung konstant einen maximal zulässigen Eingangsstrom liefert unabhängig von der am Eingang anliegenden Spannung. Eine Stromerhöhung mit einer Stromquelle ist jedoch aufwendiger als die vorstehenden Realsierungen.

## Patentansprüche

1. Sicherheitsschaltvorrichtung zum Ein- und fehlersicheren Ausschalten einer technischen Anlage (12), mit einem ersten Eingang (38) zum Aufnehmen eines über eine Zuleitung eingespeisten Taktsignals (34) mit einer ersten definierten Taktfrequenz (f_{T}), und mit einer fehlersicheren Steuer-/Auswerteeinheit (44), die dazu ausgebildet ist, das Taktsignal (34) zu verarbeiten und in Abhängigkeit davon ein Ausgangssignal zum Ein- und Ausschalten der technischen Anlage (12) zu erzeugen,
**gekennzeichnet durch** eine Stromerhöhungseinrichtung (64) zum Erhöhen eines Eingangsstroms an dem ersten Eingang (38) sowie eine Taktreferenz (36) mit einer zweiten definierten Taktfrequenz (f_{R}),
wobei die Stromerhöhungseinrichtung (64) ein Schaltelement (66) aufweist, über welches die Erhöhung des Eingangsstroms ein- und ausschaltbar ist,
wobei das Schaltelement (66) mit der Taktreferenz (36) gekoppelt ist und dazu ausgebildet ist, die Stromerhöhungseinrichtung (64) in Abhängigkeit der zweiten definierten Taktfrequenz (f_{R}) ein- und auszuschalten, um zyklische Störungen auf der Zuleitung an dem ersten Eingang (38) zu verringern.

2. Sicherheitsschaltvorrichtung nach Anspruch 1, **dadurch gekennzeichnet, dass** die Stromerhöhungseinrichtung (64) einen Masseanschluss (70) und einen ersten Widerstand (68), der zum Schaltelement (66) in Serie geschaltet ist, aufweist, wobei der erste Widerstand (68) und das Schaltelement (66) parallel zum ersten Eingang (38) angeordnet sind und der erste Eingang (38) über den Widerstand (68) und das Schaltelement (66) mit dem Masseanschluss leitend verbunden ist, wenn die Stromerhöhungseinrichtung (64) eingeschaltet ist.

3. Sicherheitsschaltvorrichtung nach einem der Ansprüche 1 oder 2, **dadurch gekennzeichnet, dass** das Schaltelement (66) eine definierte Schaltdauer aufweist, wobei die Schaltdauer kleiner ist als eine von der der Taktreferenz (36) definierte Periodendauer 1/f_{R}, insbesondere kleiner als 1/5 der Periodendauer.

4. Sicherheitsschaltvorrichtung nach Anspruch 3 **dadurch gekennzeichnet, dass** die Taktreferenz ein Regelelement (72) aufweist, über das die Schaltdauer einstellbar ist.

5. Sicherheitsschaltvorrichtung nach einem der Ansprüche 1 bis 4 **dadurch gekennzeichnet, dass** das Schaltelement (66) mit einem Detektorelement gekoppelt ist, wobei das Detektorelement die Auswertung der Eingänge (38, 40) durch die Steuer/Auswerteeinheit (44) überwacht und das Schaltelement (66) die Stromerhöhung ausschaltet, wenn ein definierter Zustand (59) erreicht ist.

6. Sicherheitsschaltvorrichtung nach einem der Ansprüche 1 bis 4 **dadurch gekennzeichnet, dass** die Stromerhöhungseinrichtung (64) einen zum Eingang (38) in Serie geschalteten variablen Widerstand (74) aufweist, wobei der variable Widerstand (74) einen maximalen und einen minimalen Widerstandswert aufweist, wobei der variable Widerstand (74) den minimalen Widerstandswert einnimmt, wenn die Stromerhöhungseinrichtung (64) eingeschaltet ist.

7. Sicherheitsschaltvorrichtung nach einem der Ansprüche 1 bis 6 **dadurch gekennzeichnet, dass** die Sicherheitsschaltvorrichtung mindestens einen zweiten Eingang (40) aufweist mit einer zweiten Stromerhöhungseinheit, wobei das Schaltelement (66) die erste und die zweite Stromerhöhungseinrichtung ein- und ausschaltet.

8. Sicherheitsschaltvorrichtung nach einem der Ansprüche 1 bis 7 **dadurch gekennzeichnet, dass** die Taktreferenz (36) mindestens einen externen Anschluss zur Aufnahme eines Fremdsignals aufweist und die Taktreferenz (36) auf das Fremdsignal synchronisiert wird.

9. Sicherheitsschaltvorrichtung nach einem der Ansprüche 1 bis 8, **dadurch gekennzeichnet, dass** die Taktreferenz (36) auf den Takt eines am Eingang (38) anliegenden Störsignals synchronisiert ist.

10. Sicherheitsschaltvorrichtung nach Anspruch 9, **dadurch gekennzeichnet, dass** das Störsignal ein durch Übersprechen eingekoppeltes Taktsignal mit der ersten definierten Taktfrequenz (f_{T}) ist.

11. Verfahren zum sicheren Detektieren eines Eingangssignal an einem ersten Eingang (38) einer Sicherheitsschaltvorrichtung zum Ein- und fehlersicheren Ausschalten einer technischen Anlage (12), mit den Schritten:
- Aufnehmen eines über eine Zuleitung eingespeisten Taktsignals (34) mit einer ersten definierten Taktfrequenz f_{T};
- Bereitstellen einer fehlersicheren Steuer/Auswerteeinheit (44);
- Verarbeiten des Taktsignal (34) durch die Steuer/Auswerteeinheit (44); und
- Erzeugen eines Ausgangssignal zum Ein- und Ausschalten der technischen Anlage (12);
**gekennzeichnet durch**
- Bereitstellen einer Taktreferenz (36) mit einer zweiten definierten Taktfrequenz f_{R};
- Bereitstellen einer Stromerhöhungseinrichtung (64) zum Erhöhen eines Eingangsstroms an dem ersten Eingang (38) mit einem Schaltelement (66), über welches die Erhöhung des Eingangsstroms ein- und ausschaltbar ist;
- Koppeln des Schaltelement (66) mit der Taktreferenz (36); und
- Ein- und Ausschalten der Stromerhöhungseinrichtung (64) **durch** das Schaltelement (66) in Abhängigkeit der zweiten definierten Taktfrequenz f_{R} der Taktreferenz (36), um zyklische Störungen auf der Zuleitung an dem ersten Eingang (38) zu verringern.

## Claims

1. A safety switching apparatus for switching-on and failsafely switching-off a technical installation (12), comprising a first input (38) for receiving a clock signal (34) having a first defined clock frequency (f_{T}), which clock signal is supplied via a feed line, and comprising a failsafe control/evaluation unit (44) which is configured to-process the clock signal (34) and to generate an output signal for switching-on and switching-off the technical installation (12) depending on the clock signal,
**characterized by** a current-increasing device (64) for increasing an input current at the first input (38) and by a clock reference (36) having a second defined clock frequency (f_{R}),
wherein the current-increasing device (64) comprises a switching element (66), by means of which the increase of the input current can be switched on and off,
wherein the switching element (66) is coupled to the clock reference (36) and is configured to switch the current-increasing device (64) on and off in response to the second defined clock frequency (f_{R}) in order to reduce cyclical disturbances on the feed line at the first input (38).

2. The safety switching apparatus of claim 1, **characterized in that** the current-increasing device (64) has a ground connection (70) and a first resistor (68) which is connected in series with the switching element (66), wherein the first resistor (68) and the switching element (66) are arranged in parallel with the first input (38) and the first input (38) is conductively connected to the ground connection via the resistor (68) and the switching element (66) if the current-increasing device (64) is switched on.

3. The safety switching apparatus of one of claims 1 and 2, **characterized in that** the switching element (66) has a defined switching period, wherein the switching period is shorter than a period 1/f_{R} defined by the clock reference (36), in particular shorter than 1/5 of the period.

4. The safety switching apparatus of claim 3, **characterized in that** the clock reference has a adjustment element (72) via which the switching period can be adjusted.

5. The safety switching apparatus of any of claims 1 to 4, **characterized in that** the switching element (66) is coupled to a detector element, wherein the detector element monitors the evaluation of the inputs (38, 40) by the control/evaluation unit (44) and the switching element (66) switches off the current increase if a defined state (59) has been reached.

6. The safety switching apparatus of any of claims 1 to 4, **characterized in that** the current-increasing device (64) has a variable resistor (74) connected in series with the input (38), wherein the variable resistor (74) has a maximum and a minimum resistor value, wherein the variable resistor (74) assumes the minimum resistor value if the current-increasing device (64) is switched on.

7. The safety switching apparatus of any of claims 1 to 6, **characterized by** at least one second input (40) with a second current-increasing unit, wherein the switching element (66) switches the first and the second current-increasing devices on and off.

8. The safety switching apparatus of any of claims 1 to 7, **characterized in that** the clock reference (36) has at least one external connection for receiving an external signal and the clock reference (36) is synchronized to the external signal.

9. The safety switching apparatus of any of claims 1 to 8, **characterized in that** the clock reference (36) is synchronized to the cycle of a disturbance signal occurring at the input (38).

10. The safety switching apparatus of claim 9, **characterized in that** the disturbance signal is a clock signal having the first defined clock frequency (f_{T}) and coupled-in by cross-talk.

11. A method for failsafely detecting an input signal at a first input (38) of a safety switching apparatus for switching-on and failsafely switching-off a technical installation (12), the method comprising the steps of:
- receiving a clock signal (34), which is supplied via a feed line, the clock signal having a first defined clock frequency f_{T},
- providing a failsafe control/evaluation unit (44),
- processing the clock signal (34) using the control/evaluation unit (44),
- generating an output signal for switching the technical installation (12) on and off,
**characterized by**
- providing a clock reference (36) having a second defined clock frequency f_{R},
- providing a current-increasing device (64) for increasing an input current at the first input (38), said current-increasing device having a switching element (66), by means of which the increase of the input current can be switched on and off
- coupling the switching element (66) to the clock reference (36), and
- switching the current-increasing device (64) on and off by means of the switching element (66) in response to the second defined clock frequency f_{R} of the clock reference (36) in order to reduce cyclical disturbances on the feed line at the first input (38).

## Revendications

1. Dispositif de commutation de sécurité pour la mise en circuit et hors circuit à sécurité intégrée d'une installation technique (12), comprenant une première entrée (38) destinée à accueillir un signal d'horloge (34), ayant une première fréquence d'horloge (f_{T}) définie, injecté par le biais d'une ligne d'arrivée et comprenant une unité de commande/interprétation (44) à sécurité intégrée qui est conçue pour traiter le signal d'horloge (34) et pour générer en fonction de celui-ci un signal de sortie destiné à mettre l'installation technique (12) en circuit ou hors circuit,
**caractérisé par** un appareil d'augmentation de courant (64) destiné à augmenter un courant d'entrée au niveau de la première entrée (38) ainsi qu'une référence d'horloge (36) ayant une deuxième fréquence d'horloge (f_{R}) définie,
l'appareil d'augmentation de courant (64) possédant un élément de commutation (66) par le biais duquel l'augmentation du courant d'entrée peut être activée et désactivée,
l'élément de commutation (66) étant connecté à la référence d'horloge (36) et conçu pour mettre l'appareil d'augmentation de courant (64) en circuit et hors circuit en fonction de la deuxième fréquence d'horloge (f_{R}) définie afin de réduire les perturbations cycliques sur la ligne d'arrivée au niveau de la première entrée (38).

2. Dispositif de commutation de sécurité selon la revendication 1, **caractérisé en ce que** l'appareil d'augmentation de courant (64) possède une borne de masse (70) et une première résistance (68) qui est branchée en série avec l'élément de commutation (66), la première résistance (68) et l'élément de commutation (66) étant montés en parallèle avec la première entrée (38) et la première entrée (38) étant reliée avec conduction à la borne de masse par le biais de la résistance (68) et de l'élément de commutation (66) lorsque l'appareil d'augmentation de courant (64) est en circuit.

3. Dispositif de commutation de sécurité selon l'une des revendications 1 ou 2, **caractérisé en ce que** l'élément de commutation (66) possède une durée de commutation définie, la durée de commutation étant inférieure à une durée de période 1/f_{R} définie par la référence d'horloge (36), notamment inférieure à 1/5 de la durée de période.

4. Dispositif de commutation de sécurité selon la revendication 3, **caractérisé en ce que** la référence d'horloge possède un élément de régulation (72) par le biais duquel peut être réglée la durée de commutation.

5. Dispositif de commutation de sécurité selon l'une des revendications 1 à 4, **caractérisé en ce que** l'élément de commutation (66) est connecté à un élément détecteur, l'élément détecteur surveillant l'interprétation des entrées (38, 40) par l'unité de commande/interprétation (44) et l'élément de commutation (66) désactivant l'augmentation de courant lorsqu'un état défini (59) est atteint.

6. Dispositif de commutation de sécurité selon l'une des revendications 1 à 4, **caractérisé en ce que** l'appareil d'augmentation de courant (64) possède une résistance variable (74) branchée en série avec l'entrée (38), la résistance variable (74) possédant une valeur de résistance maximale et une valeur de résistance minimale, la résistance variable (74) adoptant la valeur de résistance minimale lorsque l'appareil d'augmentation de courant (64) est en circuit.

7. Dispositif de commutation de sécurité selon l'une des revendications 1 à 6, **caractérisé en ce que** le dispositif de commutation de sécurité possède au moins une deuxième entrée (40) munie d'une deuxième unité d'augmentation du courant, l'élément de commutation (66) mettant en circuit et hors circuit le premier et le deuxième appareil d'augmentation du courant.

8. Dispositif de commutation de sécurité selon l'une des revendications 1 à 7, **caractérisé en ce que** la référence d'horloge (36) possède au moins une borne externe destinée à recevoir un signal externe et la référence d'horloge (36) est synchronisée sur le signal externe.

9. Dispositif de commutation de sécurité selon l'une des revendications 1 à 8, **caractérisé en ce que** la référence d'horloge (36) est synchronisée sur l'horloge d'un signal brouilleur appliqué à l'entrée (38).

10. Dispositif de commutation de sécurité selon la revendication 9, **caractérisé en ce que** le signal brouilleur est un signal d'horloge injecté par diaphonie ayant la première fréquence d'horloge (f_{T}) définie.

11. Procédé de détection fiable d'un signal d'entrée au niveau d'une première entrée (38) d'un dispositif de commutation de sécurité pour la mise en circuit et hors circuit à sécurité intégrée d'une installation technique (12), comprenant les étapes suivantes :
- accueil d'un signal d'horloge (34) injecté par le biais injecté par le biais d'une ligne d'arrivée et ayant une première fréquence d'horloge (f_{T}) définie ;
- mise à disposition d'une unité de commande/interprétation (44) à sécurité intégrée ;
- traitement du signal d'horloge (34) par l'unité de commande/interprétation (44) ; et
- génération d'un signal de sortie destiné à mettre l'installation technique (12) en circuit et hors circuit ;
**caractérisé par**
- mise à disposition d'une référence d'horloge (36) ayant une deuxième fréquence d'horloge (f_{R}) définie,
- mise à disposition d'un appareil d'augmentation de courant (64) destiné à augmenter un courant d'entrée au niveau de la première entrée (38), doté d'un élément de commutation (66) par le biais duquel l'augmentation du courant d'entrée peut être activée et désactivée ;
- connexion de l'élément de commutation (66) à la référence d'horloge (36); et
- mise en circuit et hors circuit de l'appareil d'augmentation de courant (64) par le biais l'élément de commutation (66) en fonction de la deuxième fréquence d'horloge (f_{R}) définie de la référence d'horloge (36) afin de réduire des perturbations cycliques sur la ligne d'arrivée au niveau de la première entrée (38).
